# NEUE EUROPÄISCHE PATENTSCHRIFT

(11) **EP 2 256 389 B2**
(45) Veröffentlichungstag und Bekanntmachung des Hinweises auf die Entscheidung über den Einspruch: **24.05.2023**
(45) Hinweis auf die Patenterteilung: 25.04.2018
(21) Anmeldenummer: 10005312.3
(22) Anmeldetag: 21.05.2010
(51) Int. Cl.: F16K 31/06

(54) **Elektromagnet mit einem mediengefüllten Ankerraum**
Electromagnet with a media filled armature space
Electro-aimant doté d'une pièce d'ancrage remplie d'un medium

(30) Priorität: 25.05.2009 DE 102009022538
(43) Veröffentlichungstag der Anmeldung: 01.12.2010
(73) Patentinhaber: SVM Schultz Verwaltungs-GmbH & Co. KG, 87700 Memmingen (DE)
(72) Erfinder: Weiss, Johann, 88239 Wangen (DE)
(74) Vertreter: Patentanwälte Olbricht, Buchhold, Keulertz Partnerschaft mbB

(56) Entgegenhaltungen:
- WO-A1-99/49251
- DE-A1- 2 628 484
- DE-A1- 2 826 973
- DE-A1- 3 310 996
- DE-A1- 10 146 497
- DE-B- 1 179 068
- DE-C1- 3 314 722
- DE-U1- 8 212 371
- DE-U1-202009 001 691
- US-A- 4 299 252

## Beschreibung

Die Erfindung betrifft einen Elektromagneten, bei welchem in einem mediumgefüllten Ankerraum ein Anker längsbeweglich vorgesehen ist und durch eine von elektrischem Strom durchfließbare Spulenwicklung ein Magnetfeld derart erzeugbar ist, dass dieses Magnetfeld auf den Anker wirkt und diesen im Ankerraum bewegt.

Die eingangs beschriebenen Elektromagnete sind Bestandteil von sogenannten Magnetventilen. Ein Magnetventil ist ein Ventil, das von einem Elektromagneten betätigt wird. Es sind dabei Ausführungsformen für die Steuerung von hydraulischen oder pneumatischen Anwendungen bekannt. Charakteristischerweise ist der Ankerraum, in welchem sich der Anker des Elektromagneten befindet und bewegt von einem Medium, bevorzugt dem zu steuernden Medium gefüllt. Dies kann typischerweise ein Gas, Luft (Druckluft) oder auch Flüssigkeiten, wie sie zum Beispiel in Hydraulikanwendungen Verwendung finden, sein.

Des Weiteren sind die Anordnungen bei Magnetventilen oftmals so, dass die Leitungsanschlüsse (Entlüftungsanschluss, Druckanschluss und/oder Arbeitsanschluss) in den Ankerraum münden und die Bewegung des Ankers dazu dient, ein Verschlusselement zum Öffnen oder Schließen der entsprechenden Düse am Arbeitsanschluss, Druckanschluss und/oder Entlüftungsanschluss zu bewegen. Hieraus resultiert, dass sich der Anker gegen das im Ankerraum befindliche Medium bewegen muss und daher die Bewegung entsprechend dämpft oder verlangsamt. Daher sind die Schaltzeiten solcher Elektromagneten beschränkt oder aber es müssen größere Spulen mit einer größeren Anzahl von Spulenwicklungen vorgesehen werden, und durch ein höheres Magnetfeld eine größere Beschleunigungskraft auf den Anker einzuprägen, was aber den Energieverbrauch entsprechend steigert.

Das Dokument DE 28 26 973 zeigt einen Elektromagneten mit einem mediengefüllten Ankerraum, in dem ein Anker längsbeweglich angeordnet ist.

Das Dokument DE 33 14 722 zeigt ein Magnetventil für Kälteanlagen mit einem magnetisch leitenden Stopfen und einem Tauchanker.

Das Dokument DE 20 2009 001 691 U1 zeigt eine Ventileinrichtung mit zwei unabhängig voneinander schalbaren Magnetventilen, welche miteinander verbunden sind.

Das Dokument WO 99/49251 zeigt ein Magnetventil mit einem hohlen Anker.

Das Dokument DE 1179068 zeigt ein durch Magnetkraft betätigtes Ventil mit einem durch eine Rückholkraft belasteten Anker.

Das Dokument US 4 299 252 zeigt ein Magnetventil mit einer Federvorspannung.

Die vorliegende Erfindung hat es sich zur Aufgabe gemacht, eine Anordnung vorzuschlagen, die in sich effizienter ist, insbesondere bei gleicher Energieaufnahme schnellere Schaltzeiten beziehungsweise Schaltfrequenzen erlaubt.

Zur Lösung dieser Aufgabe geht die Erfindung aus von einem Elektromagneten, wie eingangs beschrieben, und schlägt vor, dass der Anker eine von dem Medium befüllbare Durchdringungsöffnung aufweist. Die Anordnung ist am Elektromagneten so gewählt, dass die Durchdringungsöffnung den Anker durchdringt, wodurch es möglich ist, dass das Medium in einem ersten Öffnungsbereich in die Durchdringungsöffnung einströmt, durch die Durchdringungsöffnung hindurchströmt und den Anker in dem zweiten Öffnungsbereich wieder verlässt.

Der Anker trägt zumindest ein in der Durchdringungsöffnung beweglich gelagertes Verschlusselement. Das Verschlusselement öffnet und schließt eine Düse.

Erfindungsgemäß ist vorgesehen, dass das Verschlusselement gebildet ist von einem Führungselement, welches einen Dichtnippel trägt und das Führungselement das Verschlusselement in der Durchdringungsöffnung führt, wobei das Führungselement mehrere Führungsfüße aufweist und zwischen zwei Führungsfüßen je ein Strömungsbereich für das in die Durchdringungsöffnung ein- oder ausströmende Medium vorgesehen ist.

Somit wird der Bewegung des Ankers im Ankerraum ein erheblich kleiner Widerstand entgegengestellt, wodurch die Schaltzeiten entsprechend verkürzt werden. Zudem ist das Führungselement aufgebaut von einem scheibenförmigen Träger, an dem sich seitlich rechtwinklig zur Scheibenfläche die Führungsfüße anschließen, wobei die axiale Erstreckung der Führungsfüße größer wie die Dicke des Trägers ist, wobei sich mittig auf dem Träger der Dichtnippel befindet.

Der Anker liegt mit seiner Ankermantelfläche an der den Ankerraum begrenzenden Ankerrauminnenwand an. Diese ist oftmals prismatisch oder zylindrisch und zur optimalen Führung im Querschnitt dem Querschnitt des Ankers angepasst. Durch die erfindungsgemäße Ausgestaltung ist es möglich, dass die Ankermantelfläche geschlossen ist, das heißt eine möglichst gleichartige Anlage und Führung des Ankers auf der Ankerrauminnenfläche möglich ist. Damit werden die Anlageflächen, die auch gleichzeitig als Führungsflächen fungieren, gleichmäßiger belastet, was in eine Erhöhung der Lebensdauer der Anker beziehungsweise entsprechend ausgestatteter erfindungsgemäße Elektromagneten resultiert.

In einer bevorzugten Ausgestaltung des erfindungsgemäßen Elektromagneten ist eine den Anker in Längsrichtung durchdringende Durchdringungsöffnung vorgesehen. Bei der Schaltbewegung des Elektromagneten wird aufgrund des elektrischen Stroms in der Spulenwicklung ein Magnetfeld erzeugt, welches auf den magnetisierbaren Anker wirkt und diesen bewegt. Die Anordnung der Durchdringungsöffnung ist nun bevorzugt parallel zu der Bewegungsrichtung des Ankers, die erfindungsgemäße Anordnung stellt der Bewegung des Ankers einen noch geringeren Widerstand entgegen.

Dabei ist die Erfindung auf eine zur Bewegungsrichtung des Ankers parallele Anordnung der Durchdringungsöffnung nicht beschränkt, es sind je nach Anwendungsfall auch spitzwinklig, schräge oder auch rechtwinklige Durchdringungsöffnungen (bezogen auf die Bewegungsrichtung des Ankers) von der Erfindung umfasst.

Eine Anordnung der Durchdringungsöffnung in Längsrichtung des Ankers bewirkt weiterhin aber auch eine Durchflussoptimierung, da die Strömungsrichtung des Mediums im Ankerraum möglichst geradlinig und direkt ist, was zu einer Reduzierung von Strömungsumlenkungen führt, die ansonsten aufgrund der unter Umständen resultierenden turbulenten Strömung zusätzliche Widerstände bei der Bewegung des Ankers erzeugt.

In einer bevorzugten Ausgestaltung der Erfindung wird eine geschlossene Ankermantelfläche eingesetzt. Eine solche führt auch zu einer verhältnismäßig einfachen Ankergestaltung, da in der Mantelfläche keine Nuten usw. vorzusehen sind. Wie bereits ausgeführt, resultiert durch die geschlossene Ankermantelfläche auch eine möglichst gleichmäßige Belastung der Ankermantelfläche, da über dieser der Anker im Ankerraum geführt ist und daher eine entsprechende Lebensdauererhöhung.

Ein weiterer Vorzug der erfindungsgemäßen Ausgestaltung liegt darin, dass nach der Erfindung vorgeschlagen ist, einen der Ankerrauminnenfläche angepassten Ankerquerschnitt vorzusehen. Auch diese Ausgestaltung erreicht eine möglichst gleichmäßige Belastung der Ankermantelfläche für die Führungsaufgabe des Ankers im Ankerraum. Eine solche Ausgestaltung nach der Erfindung führt auch zu einer möglichst gleichartigen Ausgestaltung des Ankers in dessen tangentialer Richtung (bezogen auf die Längsachse des Ankers) und damit verbunden zu einer homogenen und daher möglichst effizienten Steuerung des Ankers durch das anzulegende Magnetfeld. Dabei ist zu beachten, dass die Ankerbewegung gerade durch die Ausgestaltung des Konus, also des Ankerendes, im Zusammenwirken mit den feststehenden Bauteilen des Elektromagneten (Magnetkern) einstellbar ist und ein Abweichen von einem rotationssymmetrischen Aufbau unter Umständen mit entsprechenden Verschlechterungen bei der Effizienz beziehungsweise Wiederholbarkeit der Schaltvorgänge aber auch der Elektromagneten untereinander einhergeht.

Der erfindungsgemäße Aufbau erlaubt es dabei grundsätzlich, dass ein rotationssymmetrischer Anker realisierbar ist.

Natürlich umfasst die Erfindung auch Lösungen, bei welchen abweichend von einer rotationssymmetrischen Ausgestaltung des Ankers, eine Anordnung gewählt wird, bei welcher der Querschnitt des Ankers in seiner Kontur der Ankerrauminnenfläche möglichst optimal angepasst ist. Durch einen rotationssymmetrischen Aufbau des Ankers resultiert eine konzentrische Anordnung der Durchdringungsöffnung bezogen auf die Längsachse beziehungsweise Bewegungsrichtung des Ankers.

Die erfindungsgemäße Anordnung ist sowohl bei Elektromagneten einsetzbar, bei welchen der Ankerraum von dem zu steuernden Medium (zum Beispiel gasförmig oder flüssig) durchströmt ist oder aber sich in dem Ankerraum ein anderes Medium als das zu steuernde oder zu regelnde Medium befindet.

Es ist ein Kennzeichen der Erfindung, dass der erfindungsgemäße Vorschlag insofern sehr variabel verwendbar ist und sowohl bei üblicherweise als Magnetventilen gekennzeichneten Anordnungen verwendet werden kann, wie auch bei Anordnungen, bei welchen der Anker auf ein Verschlusselement wirkt und das Verschlusselement eine Düse öffnet oder schließt. Dabei befindet sich die Düse nicht zwingenderweise im Ankerraum, sondern der Anker wirkt über eine von ihr betätigten Ankerstange auf ein zum Beispiel außerhalb des Ankerraumes angeordnetes Verschlusselement, wobei sowohl starre Anordnungen zwischen Anker und Ankerstange wie auch schwimmende Anordnungen zwischen Anker und Ankerstange von der Erfindung umfasst sind. Erfindungsgemäß ist vorgesehen, dass der Anker zumindest ein Verschlusselement trägt und das Verschlusselement eine Düse öffnet oder schließt. Durch eine solche Ausgestaltung resultiert eine sehr kompakte Anordnung des Elektromagneten, da die Ventilfunktion im Elektromagneten selber integriert ist. Als Düse wird dabei der Einmündungsbereich einer beliebig gearteten Anschlussleitung bezeichnet, je nach Verwendungsfall des Magnetventiles (zum Beispiel 3-2-Wege-Ventile oder andere Ausgestaltungen) werden als Anschlussleitungen zum Beispiel ein Arbeitsanschluss, ein Druckanschluss und/oder ein Lüftungsanschluss verstanden, wobei sich die Düse charakteristischerweise in dem Bereich ergibt, in welchem sich der Querschnitt für das zu strömende Medium verjüngt oder ausweitet.

Natürlich ist es möglich, dass in dem Ankerraum neben dem Anker ein weiteres vom Anker betätigtes Element vorgesehen ist, welches das Verschlusselement aufweist, wobei nicht zwingenderweise daher das Verschlusselement vom Anker zu tragen ist. Es verbleibt daher auch eine erfindungsgemäße Möglichkeit, dass zumindest ein Verschlusselement im Ankerraum angeordnet ist und dieses der Bewegung des Ankers mittelbar oder unmittelbar folgt.

In einer bevorzugten Variante der Erfindung ist vorgesehen, daß das Verschlußelement in der Durchdringungsöffnung, insbesondere im Endbereich der Durchdringungsöffnung angeordnet ist. Die Ausgestaltung des Verschlußelementes einerseits, aber auch des Ankers andererseits, ist dabei geschickterweise so gewählt, daß das Verschlußelement in Schließstellung des Ventiles dicht und zuverlässig mit dem Düsenrand zusammenzuwirken vermag. Dies kann durch entsprechende Überstände oder auch Absätze oder Schultern an dem Verschlußelement einerseits beziehungsweise dem Anker andererseits erreicht werden.

Erfindungsgemäß ist die Anordnung dabei so gewählt, daß bereits der erfindungsgemäße Effekt mit der Anordnung eines Verschlußelementes in der Durchdringungsöffnung erreicht wird. Dabei ist die Anordnung des Verschlußelementes in der Durchdringungsöffnung so gewählt, daß das Verschlußelement das Durchströmen des Mediums in der Durchdringungsöffnung nur unwesentlich oder gering behindert, wenn überhaupt. Dies kann durch entsprechende Ausgestaltung des Verschlußelementes, zum Beispiel mit der Anordnung entsprechender Strömungsbereiche an dem Verschlußelement, erreicht werden.

Die Erfindung umfaßt aber auch Lösungen, bei welchen an beiden Enden der Durchdringungsöffnung je ein Verschlußelement angeordnet ist. Auch hier ist die Ausgestaltung des Verschlußelementes beziehungsweise des Ankers beziehungsweise der Durchdringungsöffnung so gewählt, daß das Ein- und Ausströmen des Mediums von dem Ankerraum in die Durchdringungsöffnung und zurück nicht behindert wird. Dabei ist die Anordnung des Verschlußelementes an oder in der Durchdringungsöffnung so realisiert, daß ein zuverlässiges Verschließen der Düse durch das Verschlußelement gewährleistet ist. Das Zusammenwirken des Verschlußelementes mit der Düse wird durch die Bewegung des Ankers geregelt.

Die Ausgestaltung der Durchdringungsöffnung ist zum Beispiel als Bohrung in dem im übrigen aus Vollmaterial bestehenden Anker realisiert. Der Anker selber ist im Querschnitt zum Beispiel zylinderförmig. Es ist aber auch möglich, daß ein Rohrabschnitt als Anker verwendet wird und dadurch die Herstellung des Ankers entsprechend einfacher und kostengünstiger wird, da keine zerspanende Bearbeitung zur Einbringung der oftmals konzentrischen, zentralen Durchdringungsöffnung notwendig ist.

Um sicherzustellen, daß das Verschlußelement in der gewünschten Lage an der Durchdringungsöffnung, insbesondere im Endbereich der Durchdringungsöffnung, angeordnet ist, ist in der Durchdringungsöffnung eine Abstützfeder vorgesehen. Durch die Ausgestaltung und auch Dimensionierung der Abstützfeder wird auch gewährleistet, daß das Verschlußelement mit einer ausreichenden Kraft auf die Düse drückt und so die Verschlußfunktion wahrnimmt.

Geschickterweise ist oftmals vorgesehen, daß die Durchdringungsöffnung ähnlich einer Bohrung geradlinig mit im wesentlichen gleichbleibendem Querschnitt und Durchmesser im Anker angeordnet ist. Es ergibt sich dann die Möglichkeit, daß, falls zwei Verschlußelemente Verwendung finden, diese einander über eine gemeinsame Abstützfeder abstützen. So kann in einfacher Weise eine schwimmende und sich doch abstützende Anordnung der Verschlußelemente in dem Anker realisiert werden.

Auch die Ausgestaltung des Verschlußelementes selber ist gemäß der Erfindung sehr variabel gestaltbar. So ist es vorgesehen, daß das Verschlußelement ein- oder auch mehrteilig realisiert ist. Auch ein einteiliges Verschlußelement besitzt Bereiche mit unterschiedlichen Funktionalitäten, die zum Beispiel bei einem mehrteiligen Aufbau auf unterschiedliche Bauteile verteilt werden und dann in geeigneter Weise zusammenmontiert werden. In einer erfindungsgemäßen Variante ist es dabei vorgesehen, daß das Verschlußelement gebildet wird von einem Führungselement, welches einen Dichtnippel trägt und das Führungselement das Verschlußelement in der Durchdringungsöffnung führt. Die Erfindung umfaßt daher ausdrücklich sowohl den mehrteiligen Aufbau, bei welchem ein Führungselement gegenständlich von einem Dichtnippel unterschieden wird, als auch den einteiligen Aufbau, bei welchem an dem Verschlußelement ein Bereich für das Führungselement und ein anderer Bereich für den Dichtnippel vorgesehen und speziell hierfür ausgestaltet ist. Dabei umfaßt die Erfindung sowohl Lösungen, bei welchem das Verschlußelement einteilig einstofflich ist oder aber, obwohl es einteilig ausgebildet ist, aus unterschiedlichen, zum Beispiel koextrudierten Materialien besteht.

In einer bevorzugten Ausgestaltung der Erfindung ist ein Abstützflansch an der Durchdringungsöffnung vorgesehen, an welchem sich das Verschlußelement abzustützen vermag. In bevorzugter Weise ist der Abstützflansch im Endbereich der Durchdringungsöffnung vorgesehen und begrenzt so den Weg des Verschlußelementes. Gleichwohl dient der Abstützflansch dazu, ein Herausfallen des Verschlußelementes aus der Durchdringungsöffnung zu vermeiden, insbesondere, wenn sich das Verschlußelement auf der anderen Seite an einer Abstützfeder abstützt. Der Abstützflansch ist zum Beispiel als nach innen, in die Durchdringungsöffnung im Endbereich hereinstehende Ringscheibe ausgebildet und läßt im übrigen einen Durchlaß für das Durchströmen des Mediums frei. Neben dieser rotationssymmetrischen Ausgestaltung ist es natürlich auch möglich, das als Abstützflansch auch eine Abstütznase verstanden ist, also ein Element, daß nur partiell in die lichte Weite der Durchdringungsöffnung hineinsteht und ein Herausfallen des Verschlußelementes vermeidet.

Fertigungstechnisch sind für die Ausgestaltung des Abstützflansches zumindest folgende verschiedene Konzepte möglich. Der Abstützflansch kann zum Beispiel als Ringscheibe separat im Endbereich des Ankers angeordnet werden und so bewirken, daß das Verschlußelement nicht aus der Durchdringungsöffnung herausfällt. Hierzu wird der als Ringscheibe dienende Abstützflansch oder ein anderes, entsprechendes Bauteil mit dem Anker ausreichend fest verbunden, zum Beispiel verklebt oder verstemmt beziehungsweise verlötet. Hierzu gibt es eine Vielzahl unterschiedlicher Varianten. Diese Ausgestaltung ist insbesondere einsetzbar, um den mit Verschlußelementen und Abstützfedern gefüllten Raum der Durchdringungsöffnung abschließend zuverlässig zu verschließen.

Dies ist aber auch beim Herstellungsprozeß der Durchdringungsöffnung realisierbar, derart, daß keine durchgehende Bohrung in den Anker eingebracht wird, sondern eine Stufenbohrung und einen im Endbereich angeordneten Absatz beziehungsweise Flansch, der dann als Abstützflansch im Sinne der Erfindung wirkt. Hierdurch spart man sich das separate Befestigen des Abstützflansches an der Durchdringungsöffnung.

Für die Ausgestaltung des Führungselementes sind gemäß der Erfindung ebenfalls mehrere Varianten möglich. Erfindungsgemäß wird dabei vorgesehen, daß das Führungselement mehrere Führungsfüße aufweist und zwischen den Führungsfüßen je ein Strömungsbereich für das in die Durchdringungsöffnung ein- oder ausströmende Medium vorgesehen ist.

Die Ausgestaltung ist dabei so gewählt, daß die Führungsfüße einen scheiben- oder tellerartigen Träger aufnehmen, wobei der Durchmesser des Trägers geringer ist als der Durchmesser des Verschlußelementes im Gesamten, und so in dem Segment, begrenzt von den jeweiligen Füßen und dem Trägerrand (die Führungsfüße liegen am Träger seitlich an), der Strömungsbereich ist. Somit ist sichergestellt, daß auch das in die Durchdringungsöffnung eingesetzte Verschlußelement die Durchdringungsöffnung selber nicht verschließt, sondern, zum Beispiel zum Zwecke des Druckausgleiches oder des Verdrängens von Volumen bei einer Schließ-oder Öffnungsbewegung des Ankers im Ankerraum, durch den Strömungsbereich Medium in die Durchdringungsöffnung ein- und ausströmen kann.

Erfindungsgemäß ist der Dichtnippel auf dem Träger angeordnet. Als Material für das Führungselement, sei es ein- oder mehrteilig ausgebildet, bieten sich verschiedene Möglichkeiten an. Bevorzugterweise wird das Führungselement als Kunststoffteil, insbesondere als Kunststoffspritzteil realisiert und besteht zum Beispiel aus Polyethylen, Polyurethan oder ähnlichem.

Der Anker ist bevorzugt aus Metall gefertigt und aus einem magnetisierbaren Werkstoff bestehend; die daraus resultierende Werkstoffkombination vom Kunststoff des Führungselementes, welcher auf der Metalloberfläche der Innenwand der Durchdringungsöffnung gleitet, ergibt eine ausreichend leichtgängige Lagerung des Verschlußelementes.

Dabei ist nicht ausgeschlossen, daß das Verschlußelement beziehungsweise auch das Führungselement aus anderen Materialien besteht. Die Verwendung von Kunststoff ist insbesondere günstig, da es verhältnismäßig leicht ist und eine schnelle Schaltbewegung des Ankers nicht behindert.

Bevorzugterweise ist das Führungselement dabei aus einem verhältnismäßig strapazierfähigen und in sich festen Kunststoff oder Werkstoff gebildet, wohingegen in bevorzugter Weise der Dichtnippel, der von dem Führungselement getragen ist, zum Beispiel aus einem Elastomer besteht und insbesondere durch die elastische Wirkung seines Materiales eine optimale Abdichtung der Düse in seiner Schließstellung ermöglicht.

Für die Verbindung des Dichtnippels mit dem Führungselement gibt es eine Mehrzahl von Lösungsvorschlägen. Natürlich ist es möglich, Dichtnippel und Führungselement einstückig auszubilden, wobei zum Beispiel in sogenannten Koextrudier-Verfahren auch zwei grundsätzlich gleiche, aber in ihrer Dichte und sonstigen physikalischen Eigenschaft unterschiedliche Materialien gleichzeitig verarbeitbar sind. So kann mit dem Material höherer Dichte das Führungselement und mit dem Material geringerer Dichte der Dichtnippel realisiert werden. Darüber hinaus ist es natürlich möglich, mit den übrigen Verbindungsverfahren, die der Stand der Technik kennt, Dichtnippel und Führungselement zu verbinden, hierzu zählt zum Beispiel Aufkleben, Aufvulkanisieren oder auch Verschweißen usw.

Die dem Nippel abgewandte Seite des Verschlußelementes ist bevorzugt trichterförmig, sacklochartig oder innenkonisch ausgebildet, um darin die Abstützfeder sicher zentriert zu halten und zu lagern. Da die Abstützfeder für das zuverlässige Abdichten der Düse durch den Dichtnippel verantwortlich ist, wird durch eine solche Ausgestaltung zuverlässig erreicht, daß Abstützfeder und Verschlußelement einfach montierbar und zuverlässig einsetzbar sind. Erfindungsgemäß werden auch Varianten vorgeschlagen, bei welchen sich die Abstützfeder an der der Durchdringungsöffnungsinnenwand abgeneigten Innenseite der Führungsfüße abstützt. Die Außenseite der Führungsfüße übernimmt dabei die Führungsaufgabe oder Anlageaufgabe des Verschlußelementes an der Innenwand der Durchdringungsöffnung, an der Innenseite liegt die Abstützfeder an.

Erfindungsgemäß wird auch vorgesehen, daß das Verschlußelement insgesamt einstückig ausgebildet ist und auch die einzelnen Teile oder Bereiche jeweils aus dem gleichen Material bestehen. So ist zum Beispiel erfindungsgemäß vorgesehen, daß das aus Führungselement und Dichtnippel bestehende Verschlußelement komplett aus Elastomerwerkstoff oder Kunststoff (Polyurethan, Polyethylen, Polyamid usw.) besteht.

Die erfindungsgemäße Anordnung sieht des weiteren vor, daß der Arbeitsanschluß, der Druckanschluß beziehungsweise der Lüftungsanschluß an den Ankerraum anschließt. Im Einmündungsbereich der jeweiligen Anschlüsse befindet sich die Düse für das zu steuernde Medium, welche durch den Dichtnippel des Verschlußelementes wahlweise verschlossen oder freigegeben wird. Durch die Materialkombination beziehungsweise die Materialwahl wird die zuverlässige Dichtheit des auf der Düse aufsitzenden Verschlußelementes beziehungsweise Dichtnippels gewährleistet. Üblicherweise wird dabei ein verhältnismäßig elastischer Werkstoff einerseits mit einem verhältnismäßig festeren und härteren Material andererseits kombiniert. Bei der Anordnung der Erfindung wird bevorzugt vorgesehen, daß das Verschlußelement, das im Ankerraum beweglich angeordnet ist, im Anker gehalten ist. Der Ankerraum seinerseits wird begrenzt von Bauteilen des Elektromagneten, zum Beispiel dem Tubus oder dem Magnetkern, die üblicherweise aus Metall und daher aus verhältnismäßig harten Werkstoffen bestehen. Daher wird bevorzugt für den Dichtnippel ein weicheres, elastisches Material verwendet, zum Beispiel ein Elastomer.

Diese Materialwahl kann aber auch umgedreht werden. Es ist zum Beispiel möglich, einen verhältnismäßig härteren Werkstoff für die Ausgestaltung des Dichtnippels zu wählen und ein weicheres Material zumindest im Bereich des Düsenrandes anzusetzen. So ist es möglich, daß die Düse umgeben wird von einem Ring aus Elastomer. Diese kinematische Umkehr gehört daher, wie auch andere technische Umkehrsätze, gemäß dieser Lehre zur Erfindung.

In der Zeichnung ist die Erfindung schematisch dargestellt. Es zeigen:
- Fig. 1: einen Schnitt durch einen erfindungsgemäßen Elektromagneten;
- Fig. 2: ein in Fig. 1 durch eine Ellipse gekennzeichnetes Detail des Elektromagneten;
- Fig. 3a, 3b, 3c: in einer Ansicht (Fig. 3a) bzw. Draufsicht (Fig. 3c) sowie einer dreidimensionalen Ansicht (Fig. 3b) ein Detail, das in Fig. 2 eingekreist ist;

In den Figuren sind gleiche oder einander entsprechende Elemente jeweils mit den gleichen Bezugszeichen bezeichnet und werden daher, sofern nicht zweckmäßig, nicht erneut beschrieben.

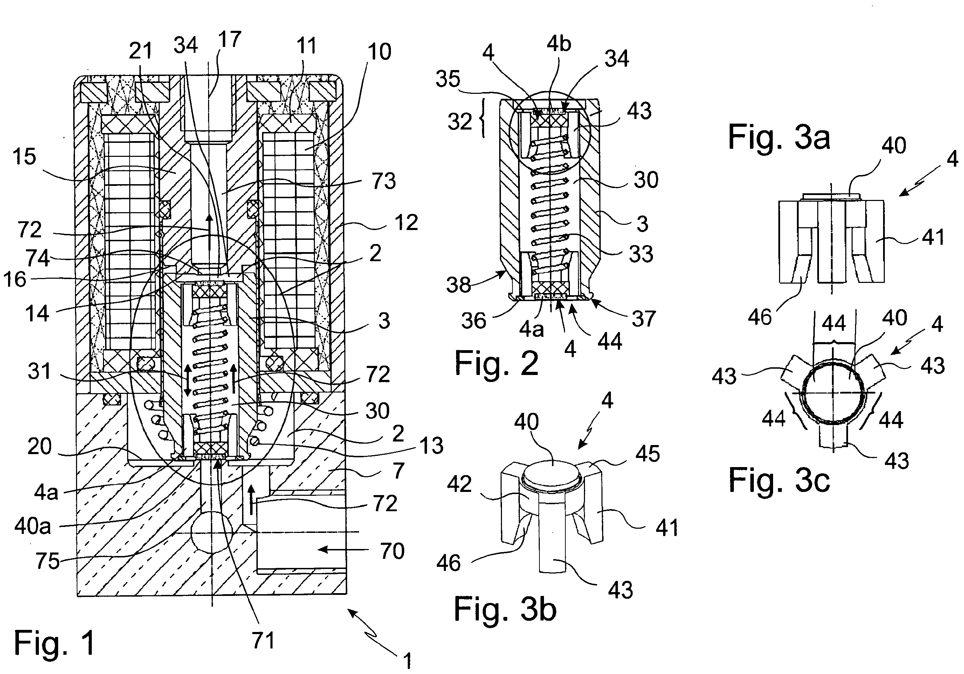

In Fig. 1 ist der erfindungsgemäße Elektromagnet 1 schematisch dargestellt. Der hier gezeigte Elektromagnet 1 wird auch als Magnetventil bezeichnet. Im oberen Bereich des Elektromagneten ist das Magnetgehäuse 12 angeordnet, welches die für einen Elektromagneten typischen Bauteile wie Spulenkörper 11, Spulenwicklung 10, Ankerraum 2 mit Anker 3 usw. aufnimmt.

Im unteren Bereich schließt sich an dem Magnetgehäuse 12 das Anschlußgehäuse 7 an, welches in seiner Ausgestaltung auch einen Teil des Ankerraumes 2 begrenzt und den Ankerraumboden 20 bildet. Das Anschlußgehäuse 7 nimmt dabei den Arbeitsanschluß 70 sowie den Druckanschluß 75 auf.

In dem hier gezeigten Ausführungsbeispiel mündet der Arbeitsanschluß 70 wie auch der Druckanschluß 75 in den Ankerraum 2, der dadurch von dem zu steuernden Medium (zum Beispiel Gas, Luft, Flüssigkeit, Öl, Wasser usw.) durchströmt wird. In der hier gezeigten Stellung des Magnetventiles (typischerweise ein 3-2-Wege-Ventil) ist die Medienstromrichtung 72 so realisiert, daß der im eigentlichen Elektromagneten 1 angeordnete Entlüftungsanschluß 73 geöffnet ist und so eine Verbindung zwischen dem Arbeitsanschluß 70 und dem Entlüftungsanschluß 73 besteht. Hierdurch ist es möglich, daß der Arbeitsanschluß 70 über die Entlüftung 73 entlüftet wird.

Die Wirkungsweise des Elektromagneten 1 ist wie üblich. Der Ankerraum 2 wird zumindest teilweise von einer Spulenwicklung 10 umgeben, die bevorzugt auf einen Spulenkörper 11 aufgewickelt ist. Bei Beaufschlagung der Spulenwicklung 10 mit elektrischem Strom bildet sich ein Magnetfeld aus, daß im Spuleninneren im wesentlichen achsparallele Magnetfeldlinien aufweist und versucht (bei entsprechender Stromrichtung), den in Fig. 1 abgefallenen Anker 3 nach oben zu ziehen, um den Luftspalt 21, der sich zwischen dem Magnetkern 15 und dem Anker 3 ergibt, zu schließen. Diese Anziehbewegung erfolgt dabei gegen die Rückstellkraft der Rückstellfeder 13, die an dem dem Magnetkern 15 gegenüber liegenden Ende des Ankers 3, in diesem Falle nicht mehr umschlossen von dem Spulenkörper 11 beziehungsweise der Spulenwicklung 10, vorgesehen ist. Dabei ist der Ankerraum 2 in dem hier gezeigten Ausführungsbeispiel nicht entlang seiner Längsachse mit gleichem Durchmesser ausgestattet, sondern der Ankerraum 2 weitet sich im unteren Bereich, außerhalb beziehungsweise unterhalb des Spulenkörpers 11, bereits im Anschlußgehäuse 7 liegend, auf.

Die durch die anziehende Bewegung des Elektromagneten einerseits und durch die rückstellende Bewegung der Feder 13 andererseits resultierende Bewegungsmöglichkeit des Ankers 3 im Ankerraum 2 ist durch den Doppelpfeil 31 angedeutet.

In der so gezeigten Stellung drückt das untere Verschlußelement 4a mit seinem daran angeordneten Dichtnippel 40a auf den Rand der Düse 71, die sich am Druckanschluß 75 in den Ankerraum 2 einmündend ergibt.

Dabei ist die Düse 71 des Druckanschlusses 75 im Ankerraumboden 20 vorgesehen, wobei der Ankerraumboden 20 hier Teil des Anschlußgehäuses 7 ist. Daher wird der Ankerraum 2 sowohl von Bauteilen des Magnetgehäuses beziehungsweise des Elektromagneten, wie auch von dem insbesondere den Arbeitsanschluß 70 und Druckanschluß 75 aufnehmenden Anschlußgehäuse 7 begrenzt. Natürlich ist erfindungsgemäß auch eine andere Ausgestaltung umfaßt.

Auf der dem Anschlussgehäuse abgewandten Seite des Ankerraums 2 wird der Ankerraum 2 von dem Magnetkern 15 begrenzt, wobei der Magnetkern 15 von oben her in den Spulenkörper 11 eintaucht und diesen bis über die Hälfte der Spulenkörperlänge ausfüllt.

Konzentrisch beziehungsweise zentral ist im Magnetkern 15 der Entlüftungsanschluß 73 als durchdringende Bohrung eingebracht, diese mündet in der Düse 74 in den Ankerraum 2. Die Ausgestaltung hierbei ist so gewählt, daß die Düse 74 von einem etwas vorstehenden Düsenring 14 gebildet ist, wodurch sich ein umlaufender Absatz 16 am seitlichen Ende des Magnetkerns 15 ergibt. Dieser Absatz 16 wirkt zusammen mit einer Ausnehmung 34 im oberen Bereich des Ankers 3, wodurch die magnetischen Eigenschaften (Strom-Kraft-Kennlinien usw.) des Elektromagneten in bekannter Weise eingestellt werden. Hieraus resultiert, daß in dem Anker 3 das Verschlußelement 4 nicht vollständig am Ende des Ankers 3 angeordnet ist, sondern etwas in diesen zurückgesetzt ist und sich daher auch die erfindungsgemäß vorgeschlagene Durchdringungsöffnung 30 erst an die Ausnehmung 34 anschließend axial durch den Anker 3 anschließt.

In dem Ankerraum 2 ist längsbeweglich (Doppelpfeil 31) der Anker 3 gelagert. Dabei wird der Ankerraum 2 seitlich von den Innenwänden eines Tubuses oder des Spulenkörpers 11 begrenzt. Der Anker 3 taucht somit auf der dem Magnetkern 15 gegenüberliegenden Seite in den Spulenkörper 11 ein. Der Anker 3 steht unten über den Spulenkörper 11 hinaus, derart, dass sich die Rückstellfeder 13 in diesem Bereich an einem endseitig an dem Anker 3 angeordneten Außenring 37, nach einem Konusabsatz 38 abzustützen vermag (vgl. Fig. 2).

Der Anker 3 ist mit einer Durchdringungsöffnung 30 ausgestattet.

Die Durchdringungsöffnung 30 ist als axial verlaufende Bohrung in dem Anker 3 vorgesehen. Die Anordnung der Durchdringungsöffnung 30 im Anker ist dabei parallel zur Spulenachse 17 des Spulenkörpers 11. Sie ist auch parallel zur Bewegungsrichtung 31 des Ankers 3. Dabei ist das untere Ende der Durchdringungsöffnung 30 in Richtung der (unteren) Düse 71 des Druckanschlusses 75 hin orientiert, wohingegen das obere Ende der Durchdringungsöffnung exakt im Bereich der (oberen) Düse 74 der Entlüftung 73 angeordnet ist.

Durch die Durchdringungsöffnung 30 stellt der Anker 3 bei seiner anziehenden oder abfallenden Bewegung (Doppelpfeil 31) dem im Ankerraum 2 befindlichen Medium einen deutlich geringeren Widerstand entgegen, da das Medium in das Innere des Ankers, in die Durchdringungsöffnung 30 hinein- und herausströmen kann.

Diese Strömungsbewegung wird zwar geringfügig durch die in der Durchdringungsöffnung 30 angeordneten Verschlusselemente 4, 4a bzw. 4b beeinträchtigt, aber nicht unterbunden. Es besteht eine kommunizierende Verbindung zwischen dem übrigen Ankerraum 2 und dem Inneren des Ankers 3, in der Durchdringungsöffnung 30, auch bei eingesetzten Verschlusselementen 4.

Diese Möglichkeit ergibt sich durch die spezielle Ausgestaltung des Verschlusselementes 4, das insbesondere in den Fig. 3a, 3b, 3c deutlich wird. Das Verschlusselement hat, wie bereits beschrieben, mindestens zwei verschiedene Funktionen oder auch zwei unterschiedliche Teilbereiche. In Ansicht (Fig. 3a) oder in dreidimensionaler Sicht (Fig. 3b) gesehen, ist das Verschlusselement 4 ähnlich einem dreifüßigen Tisch aufgebaut. Tatsächlich besitzt das Verschlusselement 4 Führungselemente 41, die durch die Führungsfüße 43 realisiert sind, sowie einen frontseitig angeordneten Dichtnippel 40, der die Dichtfunktion bei der Schließstellung des Ankers bezüglich der jeweiligen Düse bewirkt.

Das Führungselement 41 dabei ist erfindungsgemäß aufgebaut von einem scheibenförmigen Träger 42, an dem sich seitlich im Wesentlichen rechtwinklig zur Scheibenfläche die Führungsfüße 43 anschließen. Dabei sind die Führungsfüße 43 an dem Träger außen angeordnet, was insbesondere in Fig. 3c gut zu erkennen ist, wodurch sich zwischen den Führungsfüßen 43, in tangentialer Richtung jeweils ein Strömungsbereich 44 ergibt, der letztendlich eine freie Fluktuation des Mediums von dem Ankerraum 2 in die Durchdringungsöffnung 30 bei Verstellen des Ankers 3 problemlos erlaubt. Wie in Draufsicht nach Fig. 3c gezeigt, befindet sich mittig auf dem Träger 42 der Dichtnippel 40.

Wie insbesondere aus Fig. 2 hervorgeht, ist in dem Anker 3 an den beiden Enden der Durchdringungsöffnung 30 je ein Verschlusselement 4 vorgesehen. Diese stützen sich gegenseitig über eine Abstützfeder 33 ab. Die Verschlusselemente 4, 4a, 4b sind in der Durchdringungsöffnung 30 schwimmend gelagert, die Außenseiten der Führungsfüße 43 ergeben eine Führung im Zusammenwirken mit der Innenwand der Durchdringungsöffnung 30. Dabei ist zu bemerken, dass das Verschlusselement 4 im Endbereich 32 des Ankers 3 in der Durchdringungsöffnung 30 angeordnet ist.

Um die in der Durchdringungsöffnung 30 beweglich gelagerten Verschlusselemente 4 zuverlässig in der Durchdringungsöffnung 30 zu halten, ist endseitig, abschließend an der Durchdringungsöffnung 30, je ein Abstützflansch 35, 36 vorgesehen, an welchen die Verschlusselemente 4, 4a, 4b durch die Abstützfeder 33 angedrückt werden.

Dabei liegen die vorderen Anlageflächen 45 der Führungsfüße 43 an den Abstützflanschen 35, 36 derart an, dass weiterhin eine Zirkulation des Mediums durch den Strömungsbereich 44 möglich ist.

Wie sich insbesondere aus Fig. 3a ergibt, ist die axiale Erstreckung der Führungsfüße 43 größer wie die Dicke des Trägers 42. Es ergibt sich daher unterhalb des Trägers 42 ein Aufnahmeraum, der durch die Innenseiten der Führungsfüße 43 begrenzt ist und zusätzlich eine am unteren Bereich vorgesehene Abschrägung 46 besitzt, um so einen innenkonischen Ansatz zu bilden.

Diese innenkonische Ausgestaltung des Führungselementes dient zur Aufnahme des Endbereiches der Abstützfeder 33, wodurch diese eine optimale Führung und auch Zentrierung erfährt. Der Innenkonus erleichtert dabei die Montage des Führungselementes beziehungsweise Verschlusselementes und der Abstützfeder 33.

In dem in Fig. 2 gezeigten Ausgestaltung der Erfindung sind zwei gleiche Verschlusselemente 4a, 4b eingesetzt.

## Patentansprüche

1. Elektromagnet (1), bei welchem in einem mediengefüllten Ankerraum (2) ein Anker (3) längsbeweglich vorgesehen ist und durch eine von elektrischem Strom durchfließbare Spulenwicklung (10) ein Magnetfeld derart erzeugbar ist, dass dieses Magnetfeld auf den Anker (3) wirkt und diesen im Ankerraum (2) bewegt, wobei der Anker (3) eine von dem Medium befüllbare Durchdringungsöffnung (30) aufweist und der Anker (3) zumindest ein in der Durchdringungsöffnung (30) beweglich gelagertes Verschlusselement (4) trägt und das Verschlusselement (4) eine Düse (71, 74) öffnet oder schließt, wobei das Verschlusselement (4) gebildet ist von einem Führungselement (41), welches einen Dichtnippel (40) trägt und das Führungselement (41) das Verschlusselement (4) in der Durchdringungsöffnung (30) führt, **dadurch gekennzeichnet, dass** Führungselement (41) mehrere Führungsfüße (43) aufweist und zwischen zwei Führungsfüßen (43) je ein Strömungsbereich (44) für das in die Durchdringungsöffnung (30) ein- oder ausströmende Medium vorgesehen ist, wobei das Führungselement (41) aufgebaut ist von einem scheibenförmigen Träger (42), an dem sich seitlich rechtwinklig zur Scheibenfläche die Führungsfüße (43) anschließen, wobei die axiale Erstreckung der Führungsfüße (43) größer wie die Dicke des Trägers (42) ist, wobei sich mittig auf dem Träger (42) der Dichtnippel (40) befindet.

2. Elektromagnet nach Anspruch 1, **gekennzeichnet dadurch, dass** die Durchdringungsöffnung (30) den Anker (3) in Längsrichtung durchdringt und/oder eine Ankermantelfläche geschlossen ist.

3. Elektromagnet nach einem oder beiden der vorhergehenden Ansprüche, **gekennzeichnet durch** einen der Ankerrauminnenfläche angepassten Ankerquerschnitt und/oder eine rotationsgeometrische Ausgestaltung des Ankers (3).

4. Elektromagnet nach einem oder mehreren der vorhergehenden Ansprüche, **dadurch gekennzeichnet, dass** der Anker (3) auf das Verschlusselement (4) wirkt.

5. Elektromagnet nach einem oder mehreren der vorhergehenden Ansprüche, **dadurch gekennzeichnet, dass** das Verschlusselement (4) in der Durchdringungsöffnung (30), insbesondere im Endbereich (32) der Durchdringungsöffnung (30) angeordnet ist und/oder an beiden Enden (32) der Durchdringungsöffnung (30) je ein Verschlusselement (4, 4a, 4b) angeordnet ist.

6. Elektromagnet nach einem oder mehreren der vorhergehenden Ansprüche, **dadurch gekennzeichnet, dass** in der Durchdringungsöffnung (30) eine Abstützfeder (33) für das Verschlusselement (4) vorgesehen ist und/oder sich beide Verschlusselemente (4, 4a, 4b) über die Abstützfeder (33) abstützen.

7. Elektromagnet nach einem oder mehreren der vorhergehenden Ansprüche, **dadurch gekennzeichnet, dass** das Verschlusselement (4) ein- oder mehrteilig ausgebildet ist.

8. Elektromagnet nach einem oder mehreren der vorhergehenden Ansprüche, **dadurch gekennzeichnet, dass** ein Abstützflansch (35, 36) an der Durchdringungsöffnung (30), an welchem sich das Verschlusselement (4, 4a, 4b) abzustützen vermag, vorgesehen ist.

9. Elektromagnet nach einem oder mehreren der vorhergehenden Ansprüche, **dadurch gekennzeichnet, dass** das Führungselement (41) als Kunststoffteil, insbesondere als Kunststoffspritzteil ausgebildet ist und/oder der Dichtnippel (40) als Elastomer ausgebildet ist.

10. Elektromagnet nach einem oder mehreren der vorhergehenden Ansprüche, **dadurch gekennzeichnet, dass** der Dichtnippel (40) auf das Führungselement (41) aufvulkanisiert ist und/oder sich die Abstützfeder in einer innenkonischen oder sacklochartigen Ausgestaltung des Führungselementes (41) abstützt und/oder sich die Abstützfeder (33) an der der Durchdringungsöffnunginnenwand abgeneigten Innenseite der Führungsfüße (43) abstützt.

11. Elektromagnet nach einem oder mehreren der vorhergehenden Ansprüche, **dadurch gekennzeichnet, dass** das aus Führungselement (41) und Dichtnippel (40) bestehende Verschlusselement (4) komplett aus Elastomer-Werkstoff oder Kunststoff besteht und/oder die Spulenwicklung (10) auf einem Spulenkörper (11) angeordnet ist.

12. Elektromagnet nach einem oder mehreren der vorhergehenden Ansprüche, **dadurch gekennzeichnet, dass** der Spulenkörper (11) den Ankerraum (2) zumindest teilweise umgibt und/ oder als Medium ein Gas oder eine Flüssigkeit vorgesehen ist.

13. Elektromagnet nach einem oder mehreren der vorhergehenden Ansprüche, **dadurch gekennzeichnet, dass** ein Arbeitsanschluss (70), ein Druckanschluss (75) und/oder ein Entlüftungsanschluss (73) an den Ankerraum (2) anschließt.

14. Elektromagnet nach Anspruch 13, **dadurch gekennzeichnet, dass** am Entlüftungsanschluss (73) und/oder am Druckanschluss (75) eine durch das Verschlusselement (4, 4a, 4b) verschließbare beziehungsweise öffenbare Düse (71, 74) angeordnet ist und/oder die Düse (71, 74) aus einem Elastomer-Werkstoff gebildet ist.

15. Elektromagnet nach einem oder mehreren der vorhergehenden Ansprüche, **dadurch gekennzeichnet, dass** der Elektromagnet (1) als Magnetventil ausgebildet ist und/oder zumindest ein Verschlusselement (4) im Ankerraum (2) angeordnet ist.

## Claims

1. Electromagnet (1) where in a media-filled armature space (2) an armature (3) is provided moving longitudinally, and through a coil winding (10) which can be flowed through by electricity a magnetic field can be generated such that this magnetic field acts on the armature (3) and moves it in the armature space (2), wherein the armature (3) has a penetration opening (30), that can be filled by the medium, and the armature (3) carries at least one locking element (4) mounted movably in the penetration opening (30), and the locking element (4) opens or closes a nozzle (71, 74), wherein the locking element (4) is formed by a guide element (41) carrying a seal nipple (40) and the guide element (41) guides the locking element (4) in the penetration opening (30), **characterized in that** the guide element (41) has several guide bases (43), and between two guide bases (43) one flow area (44) each for the medium entering or leaving the penetration opening (30) is provided, wherein the guide element (41) is constructed from a disc-shaped carrier (42) which is adjoined laterally at a right angle to the disc surface by the guide bases (43), wherein the axial extent of the guide bases (43) is greater than the thickness of the carrier (42), wherein the seal nipple (40) is situated centrally on the carrier (42).

2. Electromagnet according to Claim 1, **characterized in that** the penetration opening (30) penetrates the armature (3) in a longitudinal direction, and/or an armature outside surface is closed.

3. Electromagnet according to one or both of the preceding claims, **characterized by** an armature cross section that is adapted to the inner surface of the armature space, and/or a rotation-geometric design of the armature (3).

4. Electromagnet according to one or more of the preceding claims, **characterized in that** the armature (3) acts on the locking element (4).

5. Electromagnet according to one or more of the preceding claims, **characterized in that** the locking element (4) is arranged in the penetration opening (30), in particular in the end region (32) of the penetration opening (30), and/or on both ends (32) of the penetration opening (30) one locking element (4, 4a, 4b) each is arranged.

6. Electromagnet according to one or more of the preceding claims, **characterized in that** in the penetration opening (30) a support spring (33) is provided for the locking element (4), and/or both locking elements (4, 4a, 4b) are supported via the support spring (33).

7. Electromagnet according to one or more of the preceding claims, **characterized in that** the locking element (4) consists of one or multiple parts.

8. Electromagnet according to one or more of the preceding claims, **characterized in that** a support flange (35, 36) is provided at the penetration opening (30) where the locking element (4, 4a, 4b) can be supported.

9. Electromagnet according to one or more of the preceding claims, **characterized in that** the guide element (41) is configured as a synthetic part, in particular as a synthetic injection-moulded part, and/or the seal nipple (40) is in the form of an elastomer.

10. Electromagnet according to one or more of the preceding claims, **characterized in that** the seal nipple (40) is vulcanized on the support element (41), and/or the support spring is supported in an interior conical or blind-hole-like design of the guide element (41), and/or the support spring (33) is supported on the inside of the guide bases (43) facing away from the interior wall of the penetration opening.

11. Electromagnet according to one or more of the preceding claims, **characterized in that** the locking element (4) consisting of the guide element (41) and seal nipple (40) consists entirely of elastomer material or synthetic material, and/or the coil winding (10) is arranged on a coil body (11).

12. Electromagnet according to one or more of the preceding claims, **characterized in that** the coil body (11) encircles the armature space (2) at least partially, and/or a gas or liquid is provided as medium.

13. Electromagnet according to one or more of the preceding claims, **characterized in that** a working port (70), a pressure port (75), and/or a vent port (73) adjoins the armature space (2).

14. Electromagnet according to Claim 13, **characterized in that** at the vent port (73) and/or at the pressure port (75) a nozzle (71, 74) that can be closed or opened by the locking element (4, 4a, 4b) is arranged, and/or the nozzle (71, 74) is formed from an elastomer material.

15. Electromagnet according to one or more of the preceding claims, **characterized in that** the electromagnet (1) is configured as a magnetic valve, and/or at least one locking element (4) is arranged in the armature space (2).

## Revendications

1. Électroaimant (1), avec lequel un induit (3) est prévu de manière mobile longitudinalement dans un espace d'induit (2) rempli d'un fluide et un champ magnétique peut être généré à l'aide d'un enroulement de bobine (10) parcouru par un courant électrique de façon que ce champ magnétique agisse sur l'induit (3) et déplace celui-ci à l'intérieur de l'espace d'induit (2), l'induit (3) comportant une ouverture de passage (30) qui peut être remplie par le fluide et l'induit (3) portant un élément de fermeture (4) qui est logé de manière mobile dans l'ouverture de passage (30) et l'élément de fermeture (4) ouvrant ou fermant une buse (71, 74), et l'élément de fermeture (4) étant formé par un élément de guidage (41) qui porte un embout d'étanchéité (40) et l'élément de guidage (41) guidant l'élément de fermeture (4) dans l'ouverture de passage (30), **caractérisé en ce que** l'élément de guidage (41) comporte plusieurs pieds de guidage (43) et une zone d'écoulement (44) destinée au fluide rentrant ou sortant dans l'ouverture de passage (30) est prévue à chaque fois entre deux pieds de guidage (43), l'élément de guidage (41) étant formé par un support (42) en forme de disque au niveau duquel les pieds de guidage (43) sont contigus latéralement et perpendiculairement à la surface de disque, l'extension axiale des pieds de guidage (43) étant supérieure à l'épaisseur du support (42), l'embout d'étanchéité (40) se trouvant au milieu sur le support (42).

2. Électroaimant selon la revendication 1, **caractérisé en ce que** l'ouverture de passage (30) traverse l'induit (3) dans la direction longitudinale et/ou une surface d'enveloppe de l'induit est fermée.

3. Électroaimant selon l'une ou les deux revendications précédentes, **caractérisé par** une section transversale d'induit adaptée à la surface intérieure de l'espace d'induit et/ou par une configuration à géométrie rotationnelle de l'induit (3).

4. Électroaimant selon une ou plusieurs des revendications précédentes, **caractérisé en ce que** l'induit (3) agit sur l'élément de fermeture (4).

5. Électroaimant selon une ou plusieurs des revendications précédentes, **caractérisé en ce que** l'élément de fermeture (4) est disposé dans l'ouverture de passage (30), en particulier dans la zone d'extrémité (32) de l'ouverture de passage (30) et/ou un élément de fermeture (4, 4a, 4b) est respectivement disposé aux deux extrémités (32) de l'ouverture de passage (30).

6. Électroaimant selon une ou plusieurs des revendications précédentes, **caractérisé en ce qu'**un ressort d'appui (33) pour l'élément de fermeture (4) est prévu dans l'ouverture de passage (30) et/ou les deux éléments de fermeture (4, 4a, 4b) prennent appui sur le ressort d'appui (33).

7. Électroaimant selon une ou plusieurs des revendications précédentes, **caractérisé en ce que** l'élément de fermeture (4) est configuré en une ou plusieurs parties.

8. Électroaimant selon une ou plusieurs des revendications précédentes, **caractérisé en ce qu'**une bride d'appui (35, 36) est prévue au niveau de l'ouverture de passage (30) contre laquelle l'élément de fermeture (4, 4a, 4b) peut prendre appui.

9. Électroaimant selon une ou plusieurs des revendications précédentes, **caractérisé en ce que** l'élément de guidage (41) est configuré comme une pièce en plastique et en particulier comme une pièce injectée en matière plastique et/ou l'embout d'étanchéité (40) est fabriqué en élastomère.

10. Électroaimant selon une ou plusieurs des revendications précédentes, **caractérisé en ce que** l'embout d'étanchéité (40) est vulcanisé sur l'élément de guidage (41) et/ou le ressort d'appui prend appui dans une configuration conique intérieure ou de type trou borgne de l'élément de guidage (41) et/ou ressort d'appui (33) prend appui contre le côté intérieur des pieds de guidage (43) qui est opposé à la paroi intérieure de l'ouverture de passage.

11. Électroaimant selon une ou plusieurs des revendications précédentes, **caractérisé en ce que** l'élément de fermeture (4) composé de l'élément de guidage (41) et de l'embout d'étanchéité (40) est entièrement fabriqué en une matière d'élastomère ou une matière plastique et/ou l'enroulement de bobine (10) est disposé sur un corps de bobine (11).

12. Électroaimant selon une ou plusieurs des revendications précédentes, **caractérisé en ce que** le corps de bobine (11) entoure au moins partiellement l'espace d'induit (2) et/ou **en ce qu'**un liquide ou un gaz est prévu comme fluide.

13. Électroaimant selon une ou plusieurs des revendications précédentes, **caractérisé en ce qu'**un raccord de service (70), un raccord de pression (75) et/ou un raccord de ventilation (73) se raccorde à l'espace d'induit (2).

14. Électroaimant selon la revendication 13, **caractérisé en ce qu'**une buse (71, 74) pouvant être fermée ou ouverte par l'élément de fermeture (4, 4a, 4b) est dispose au niveau du raccord de ventilation (73) et/ou au niveau du raccord de pression (75) et/ou la buse (71, 74) est fabriquée en un matériau élastomère.

15. Électroaimant selon une ou plusieurs des revendications précédentes, **caractérisé en ce que** l'électroaimant (1) est configuré comme une électrovanne et/ou au moins un élément de fermeture (4) est situé dans l'espace d'induit (2).
